# EUROPÄISCHE PATENTSCHRIFT

(11) **EP 2 697 306 B1**
(45) Veröffentlichungstag und Bekanntmachung des Hinweises auf die Patenterteilung: **02.03.2016**
(21) Anmeldenummer: 12713974.9
(22) Anmeldetag: 10.04.2012
(51) Int. Cl.: C08L 67/02

(54) **FLAMMHEMMENDE THERMOPLASTISCHE FORMMASSE**
FLAME-RETARDANT THERMOPLASTIC MOLDING COMPOSITION
MATIÈRE À MOULER THERMOPLASTIQUE IGNIFUGE

(30) Priorität: 15.04.2011 EP 11162549
(43) Veröffentlichungstag der Anmeldung: 19.02.2014
(73) Patentinhaber: BASF SE, 67056 Ludwigshafen (DE)
(72) Erfinder: XUE, Siqi, Shanghai 200433 (CN); KÖNIG, Alexander, 76646 Bruchsal (DE); JAIN, Sachin, Jalgaon 425001 (IN)
(86) Internationale Anmeldenummer: PCT/EP2012/056403
(87) Internationale Veröffentlichungsnummer: WO 2012/139990

(56) Entgegenhaltungen:
- DE-A1- 2 248 247
- DE-A1-102007 041 594
- JP-A- 11 335 534

## Beschreibung

Die Erfindung betrifft eine Halogen- und seltene Erden freie thermoplastische Formmasse, die frei von rotem Phosphor ist, enthaltend
A) von 40 bis 60 Gew.-% eines Polyalkylenterephthalats
B) von 0.01 bis 10 Gew.-% eines Polyolefins ausgewählt aus der Gruppe
   b1) Polyethylen mit einem Molekulargewicht (M_{w}) von 85 000 bis 900 000 g/mol
   b2) Polypropylen mit einem Molekulargewicht (M_{w}) von 85 000 bis 900 000 g/mol
   b3) Polypropylen-Copolymere mit einem Molekulargewicht (M_{w}) von 85 000 bis 900 000 g/mol
   und deren Mischungen
C) von 10 bis 30 Gew.-% eines Flammschutzmittel, ausgewählt aus der Gruppe
   c1) der stickstoffhaltigen Verbindungen
   c2) der phosphorhaltigen Verbindungen
   und deren Mischungen
D) von 0.01 bis 60 Gew.-% eines Verstärkungsmittels
E) von 0 bis 50 Gew.% eines weiteren Zusatzstoffes
wobei die Summe der Gewichtsanteile 100 Gew.-% bezogen auf die thermoplastische Form masse ergibt.

Weiterhin betrifft die Erfindung die Verwendung der erfindungsgemäßen thermoplastischen Formmasse zur Herstellung von Fasern, Folien oder Formkörpern sowie Fasern, Folien oder Formkörper, die die erfindungsgemäße thermoplastische Formmasse enthalten. Die Erfindung betrifft des Weiteren die Verwendung der thermoplastischen Formmasse als Überzugmittel.

Bevorzugte Ausführungsformen sind den Ansprüchen und der Beschreibung zu entnehmen. Kombinationen bevorzugter Ausführungsformen fallen in den Rahmen der vorliegenden Erfindung.

Der Bedarf an flammhemmenden Formmassen ist von wachsendem Interesse, wobei insbesondere Zusammensetzungen gefragt sind, die frei von Zusätzen sind, de potentielle Risiken für Umwelt und Mensch bedeuten können. Gleichzeitig sollen diese Formmassen einem hohen technischen Niveau genügen.

Die Schrift KR 10 2007 0 117 410 offenbart Polyalkylenterephthalat und Polyolefin enthaltende Formmassen. Als Flammschutzmittel werden Hydroxidsalze eingesetzt. Die Schrift DE 10 2007 04 1594 offenbart flammwidrige Polyesterformmassen.

Auch aus den Dokumenten JP 11 335 531, JP 11 335 535 und JP 11 335 534 sind Polyalkylenterephthalat und Polyolefin enthaltende Formmassen bekannt. Die dort offenbarten Formmassen enthaltne roten Phosphor als Flammschutzmittel.

CN 101 434 727 offenbart Formmassen umfassend ein halogenfreies Flammschutzmittel, umfassend ein Polyalkylenterephthalat und ein Polyolefin.

In der Schrift CN 101 445 650 werden Formmassen offenbart, die ein Polyalkylenterephthalat und ein Polyolefin umfassen. Diese Formmassen umfassen seltene Erden Salze. Die seltene Erden Salze werden in geringen Mengen als Nuklierungsmittel zugegeben.

Aufgabe der vorliegenden Erfindung war es, eine Formmasse zu entwickeln, die gut zu verarbeiten ist und zugleich eine flammhemmende Wirkung aufweist. Ein weiteres Ziel war es, eine Formmasse zur Verfügung zu stellen, die eine hohe Kriechstromfestigkeit aufweist. Zudem sollte die Formmasse eine möglichst helle Eigenfarbe aufweisen.
Allerdings sollte die Formmasse halogenfrei, insbesondere chlor- und bromfrei sein. Darüber hinaus sollte die Formasse weder roten Phosphor noch seltene Erden Salze enthalten.

Gelöst wird die gestellte Aufgabe mit einer eingangs beschriebenen thermoplastischen Formmasse.
Die erfindungsgemäße thermoplastische Formmasse ist halogenfrei. Halogenfrei ist in diesem Zusammenhang entsprechend den Definitionen der "International Electronical Commission" (IEC 61249-2-21) und der "Japan Printed Circuit Association" (JPCA-ES-01-1999) zu verstehen, die unter halogenfreien Materialen solche verstehen, die weitestgehend chlor- und bromfrei sind. Des Weiteren enthält die thermoplastische Formmasse keine seltenen Erden wie Lanthan oder Cer.
Insbesondere enthält erfindungsgemäße thermoplastische Formmasse halogenfreie Flammschutzmittel.

Komponente A) der erfindungsgemäßen thermoplastischen Formmasse ist ein Polyalkylenterephthalat. Hierunter werden auch Mischungen von Polyalkylenterephthalaten unterschiedlicher Struktur und/oder Kettenlänge verstanden.
Im Rahmen der Erfindung ist Polyalkylenterephthalat nicht auf Terephthalat enthaltende Verbindungen beschränkt. So kann die Polyalkylenterephthalat Komponente auch mindestens eine Säure unterschiedlich von Terephthalsäure umfassen.
Diese Säure kann sich von Strukturen ableiten, die einen aromatischen Ring in der Hauptkette enthalten, der von einer aromatischen Dicarbonsäure stammt. Der aromatische Ring kann unsubstituiert oder substituiert sein. Als Substituenten bieten sich unter anderem C₁- bis C₄- Alkylgruppen wie Methyl-, Ethyl-, i- bzw. n-Propyl- und n-, i- bzw. t-Butylgruppen oder Fluor an. Bevorzugte Dicarbonsäuren sind substituierte, insbesondere unsubstituierte 2,6-Naphthalindicarbonsäure, Terephthalsäure und Isophthalsäure oder deren Mischungen. Bevorzugt sind darunter Terephthalsäure oder Isophthalsäure oder deren Mischungen zu verstehen.

Polyalkylenterephthalate enthalten neben den Resten, die sich von entsprechenden Dicarbonsäuren ableiten, aliphatische Kohlenwasserstoffreste, die sich von den entsprechenden Alkylendiolen ableiten. Die Alkylendiole können verzweigt oder unverzweigt also linear sein. Verzweigte Polyalkylenterephthalate umfassen verzweigte Kohlenwasserstoffreste, während lineare Polyalkylenterephthalate unverzweigte Kohlenwasserstoffreste umfassen. In den erfindungsgemäßen thermoplastischen Zusammensetzungen werden bevorzugt lineare Polyalkylenterephthalate eingesetzt.
Von den Alkylendiolen werden Diole mit 2 bis 6 Kohlenstoffatomen bevorzugt, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol oder Neopentylglykol oder deren Mischungen.

In einer bevorzugten Ausführungsform der Erfindung kann die Komponente A Polyethylenterephthalat, 1,3-Polypropylenterephthalat, 1,4-Polybutylenterephthalat, Polyethylennaphthalat, 1,4-Polybutylennaphthalat, 1,3-Polypropylenterephthalat, Poly(cyclohexandimethanolterephthalat), oder deren Mischungen umfassen, wobei die Komponente A von 5 bis 20 Gew.-% einer Säure unterschiedlich von Terephthalat umfasst..
Diese Polyalkylenterephthalate haben in der Regel eine in Phenol/Tetrachlorkohlenstoff (1/1-Volumenverhältniss) gemessene Grenzviskosität von 0.4 dL/g bis 2.0 dL/g. Die Polyalkylenterephthalate haben in der Regel ein mittleres Molekulargewicht von 5000 bis 130000 g/mol (Mw) (bestimmt mittels Gelpermeationschromatographie in Chloroform/Hexafluoroisopropanol (5/95, Volumenverhältniss) bei 25°C gemessen gegen einen Polystyrol-Standart)

Erfindungsgemäß enthält die thermoplastische Formmasse als Komponente B) ein Polyolefin aufgebaut aus Wiederholungseinheiten, die Ethylen und/oder Propylen umfassen, wobei polare funktionelle Gruppen ausgeschlossen sind. Hierunter sind erfindungsgemäß auch Mischungen dieser Polyolefine unterschiedlicher Kettenlänge zu verstehen.

Unter polaren funktionellen Gruppen werden alle funktionellen Gruppen in eingebauten Monomereinheiten verstanden, die andere Atome als Kohlenstoff und Wasserstoff beinhalten. Somit ist das die erfindungsgemäß verwendete Polyolefine im Wesentlichen aufgebaut aus den Monomereinheiten Ethylen und/oder Propylen, wobei Comonomere und/oder funktionelle Gruppen enthaltende Einheiten ebenso ausgeschlossen sind wie ungesättigte Gruppen. Folglich ist die Komponente B) aufgebaut aus gesättigten aliphatischen Wiederholungseinheiten, die aus Kohlenstoff und Wasserstoff bestehen.

Das Polyolefin gemäß Komponente B) kann jedoch übliche Verzweigungsstellen sowie in geringem Umfang, insbesondere bis zu 2 Gew.-%, weitere Monomereinheiten enthalten, die aus Kohlenstoff und Wasserstoff aufgebaut sind. Das Polyolefin der Komponente B) kann somit geringe Mengen (d.h. insbesondere bis 2 Gew.-% bezogen auf das Polyolefin) anderer Monomereinheiten, z. B. solche, die sich von 1-Buten, 1-Penten, 1-Hexen, 1-Hepten oder 1-Octen oder 4-Methylpenten-1 ableiten, enthalten.

Somit enthält die thermoplastische Formmasse als Komponente B) mindestens ein lineares oder verzweigtes Polyolefin im Wesentlichen bestehend aus Wiederholungseinheiten, die aus Ethylen und Propylen ausgewählt sind.

Bevorzugt wird die Komponente B) ausgewählt aus der Gruppe der Polyethylene, Polypropylene und Copolypropylene und deren Mischungen. Vorzugsweise ist Komponente B) ein Polypropylen und/oder ein Poly(propylen-ethylen).

Sofern im Rahmen der vorliegenden Erfindung von Polyethylen die Rede ist, wird darunter ein Homopolymer des Ethylens verstanden. Das Polyethylen b1) kann auch eine Mischung von Homopolymeren unterschiedlicher Struktur und/oder Kettenlänge sein.
Das verwendete Polyethylen b1) hat einen üblichen Schmelzflussindizes (MFR gemessen bei 190°C, 2.16 Kg) von 0.1 g/10 min bis 100 g/10 min, bevorzugt von 2 g/10 min bis 50 g/10 min. Das Molekulargewicht (Mw) des Polyethylens (b1) liegt von 85000 bis 900,000 g/mol, bevorzugt von 95000 bis 750,000 g/mol (bestimmt mittels Hochtemperatur-GPC in Trichlorbenzol gegen einen Polystyrolstandard bei 130°C). Die Dichte des Polyethylens liegt von 0.850 g/cm³ bis 0.925 g/cm³, bevorzugt von 0.870 g/cm³ bis 0.925 g/cm³ (gemessen mittels Eintauchverfahren nach der DIN EN ISO 1183-1).

Sofern im Rahmen der vorliegenden Erfindung von Polypropylen die Rede ist, wird darunter ein Homopolymer des Propylens verstanden, das Verzweigungen, insbesondere lineare Verzweigungen, aufweisen kann. Das Polypropylen b2) kann auch eine Mischung von Homopolypropylen unterschiedlicher Struktur und Kettenlänge sein.
Das Polypropylen b2) hat einen üblichen Schmelzflussindizes (MFR gemessen bei 230°C, 2.16 Kg) von 0.1 g/10 min bis 100 g/10 min, bevorzugt von 2 g/10 min bis 50 g/10 min. Das Molekulargewicht (Mw) des Polypropylens liegt von 85000 bis 900,000 g/mol, bevorzugt von 95000 bis 750,000 g/mol (bestimmt mittels Hochtemperatur-GPC in Trichlorbenzol gegen einen Polystyrolstandard bei 135 °C). Die Dichte des Polypropylens liegt von 0.850 g/cm³ bis 0.925 g/cm³, bevorzugt von 0.870 g/cm³ bis 0.925 g/cm³ (gemessen mittels Eintauchverfahren nach der DIN EN ISO 1183-1).

Das Copolypropylen b3) ist bevorzugt ein statistisches Copolymer oder eine Mischung von statistischen Copolymeren unterschiedlicher Struktur und/oder Kettenlänge.
Das Copolymer b3) besteht insbesondere aus Propylen und Ethylen sowie bis zu 2 Gew.-% anderer C3-C20 Alkene, umfassend 1-Buten, 1-Penten, 1-Hexen, Methyl-1-buten, Methyl-1-penten, 1-Octene, 1-Decen und deren Mischungen.
Ein bevorzugtes Copolypropylen b3) ist Copoly(propylen-ethylen) hergestellt aus Propylen und Ethylen. In diesem Copoly(propylen-ethylen) b3) kann der Propylengehalt bei 75 bis 98 Gew.-%, bevorzugt bei 85-95 Gew.-% liegen. Der Ethylengehalt in diesem Copoly(propylen-ethylen) kann bei 2-25 Gew.-%, insbesondere bei 5-15 Gew.-% liegen.
Das verwendete Copolypropylen b3) hat einen üblichen Schmelzflussindizes (MFR gemessen bei 230 °C, 2.16 Kg) von 0.1 g/10 min bis 100 g/10 min, bevorzugt von 2 g/10 min bis 50 g/10 min. Das Molekulargewicht (Mw) des Copolypropylens liegt von 85000 bis 900,000 g/mol, bevorzugt von 95000 bis 750,000 g/mol (bestimmt mittels Hochtemperatur-GPC in Trichlorbenzol gegen einen Polystyrolstandard bei 135 °C). Die Dichte des Copolypropylens liegt von 0.850 g/cm³ bis 0.925 g/cm³, bevorzugt von 0.870 g/cm³ bis 0.925 g/cm³ (gemessen mittels Eintauchverfahren nach der DIN EN ISO 1183-1).

Die erfindungsgemäß verwendeten Polyolefine sind erhältlich durch Polymerisation von mindestens einem der Monomeren Ethylen und Propylen. Methoden hierzu sind dem Fachmann bekannt.

Zudem enthält die erfindungsgemäße thermoplastische Formmasse ein Flammschutzmittel C) das ausgewählt ist aus der Gruppe der stickstoffhaltigen Verbindungen c1), der phosphorhaltigen Verbindungen c2) und deren Mischungen.

Aus der Gruppe der stickstoffhaltigen Verbindungen (c1) kann die erfindungsgemäße thermoplastische Formmasse eine halogenfreie Verbindung aus der Gruppe der stickstoffhaltigen Heterocyclen mit mindestens einem Stickstoffatom enthalten. Auch kann die thermoplastische Zusammensetzung Gemische der stickstoffhaltigen Heterocyclen mit mindestens einem Stickstoffatom enthalten.

Zu den gemäß der Erfindung bevorzugt geeigneten Flammschutzmitteln zählt Melamincyanurat. Melamincyanurat ist ein Reaktionsprodukt aus vorzugsweise äquimolaren Mengen von Melamin Formel (I) und Cyanursäure bzw. Isocyanursäure Formel (la) und (1b).

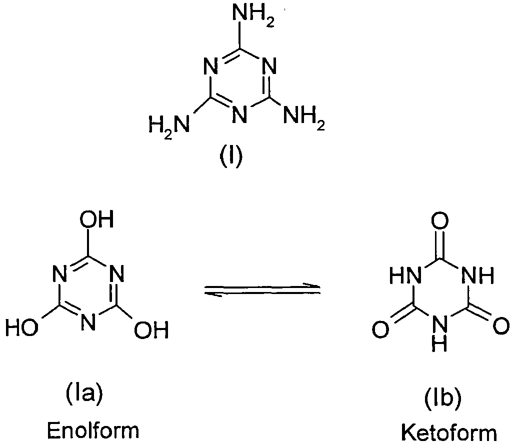

Melamincyanurat kann z.B. durch Umsetzung von wässrigen Lösungen der Ausgangsverbindungen bei 90 bis 100°C erhalten werden.

Weitere geeignete Verbindungen (oft auch als Salze oder Addukte bezeichnet) sind Melamin, Melaminborat, und Melaminoxalat. Auch können Mischungen dieser Salze eingesetzt werden. Allerdings werden keine Salze von stickstoffhaltigen Heterocyclen mit mindestens einem Stickstoffatom und seltenen Erden Elementen eingesetzt.

Unter stickstoffhaltigen Flammschutzmitteln sind auch solche zu verstehen, wie sie in der WO 2002/96976 beschrieben sind.

Hierbei eignen sich Melaminphosphat prim., -phosphat sec. und -pyrophosphat sec., Neopentylglycolborsäuremelamin sowie Melaminpolyphosphat (CAS-Nr 56386-64-2).

**Geeignete Guanidinsalze sind**

| | CAS-N r. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet ist Ammoniumphosphat. Ebenso geeignet ist Ammoniumpolyphosphat (NH₄PO₃)ₙ mit n ca. von 200 bis 1000 bevorzugt von 600 bis 800, und Tris(hydroxyethyl)isocyanurat (THEIC) der Formel II 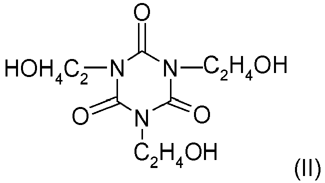 Weiterhin geeignet sind Benzoguanamin-Verbindungen der Formel III 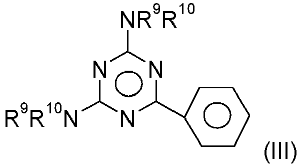 in der R⁹,R¹⁰ geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel IV 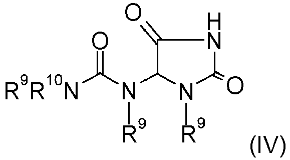 wobei R⁹,R¹⁰ die in Formel III angegebene Bedeutung haben sowie deren Salze mit Phosphorsäure, Borsäure und/oder Pyrophosphorsäure sowie Glycolurile der Formel V oder dessen Salze mit den oben genannten Säuren 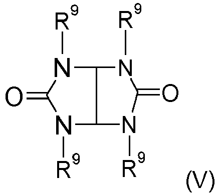 in der R⁹ die in Formel III genannte Bedeutung hat.

Das gemäß der Erfindung verwendbare Cyanguanidin (Formel VI) wird z.B. durch Umsetzung von Kalkstickstoff (Calciumcyanamid) mit Kohlensäure erhalten, wobei das entstehende Cyanamid bei pH 9 bis 10 zu Cyanguanidin dimerisiert.

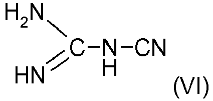

Als stickstoffhaltige Verbindungen (c1) eignen sich insbesondere Verbindungen aus der Gruppe der stickstoffhaltigen Heterocyclen mit mindestens einem Stickstoffatom.

Als phosphorhaltige Verbindung (c2) kann die erfindungsgemäße thermoplastische Formmasse ein Phosphinsäuresalz der Formel (VII) und/oder Diphosphinsäuresalze der Formel (VIII) und/oder deren Polymere umfassen. Auch kann die thermoplastische Zusammensetzung Gemische der phosphorhaltigen Verbindung (c2) umfassen. Allerdings werden als Kationen keine seltenen Erden Elemente eingesetzt.
Aus der großen Zahl von erfindungsgemäß geeigneten phosphorhaltigen Verbindungen seien nur einige Beispiele erwähnt. 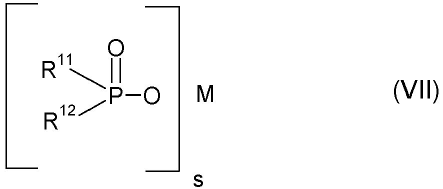 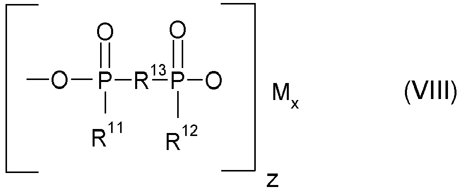 wobei die Substituenten folgende Bedeutung haben:
- R¹¹, R¹²: Wasserstoff, C₁- bis C₆-Alkyl, vorzugsweise C₁- bis C₄-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest R¹¹ oder R¹², insbesondere R¹¹ und R¹² Wasserstoff oder Ethyl ist;
- R¹³: C₁- bis C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen; Arylalkylen, z.B. Phenyl-methylen, Phenyl-ethylen, Phenyl-propylen, Phenyl-butylen;
- M ein: Erdalkali-, Alkalimetall, AI, Zn, Fe, Mg, Ca;
- s: eine ganze Zahl von 1 bis 3;
- z: eine ganze Zahl von 1 und 3 und
- x: 1 oder 2.

Besonders bevorzugt sind Verbindungen der Formel VII, in denen R¹¹ und R¹² Wasserstoff, Methyl, Ethyl oder Isobutyl sind, wobei M vorzugsweise Ca, Zn, Mg oder Al ist und Aluminium Diethylphosphinat und Aluminium Hypophosphite ganz besonders bevorzugt sind.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenyl-phosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenyl-phosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und/oder Resorcinol-bis-(diphenylphosphat) und/oder dessen kernsubstituierten Derivate der allgemeinen Formel X (RDP): 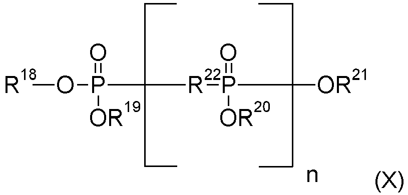 in der die Substituenten folgende Bedeutung haben:
- R¹⁸-R²¹: ein aromatischer Rest mit 6 bis 20 C-Atomen, bevorzugt ein Phenylrest, welcher mit Alkylgruppen mit 1 bis 4 C-Atomen, bevorzugt Methyl, substituiert sein kann,
- R²²: ein zweiwertiger Phenolrest, bevorzugt 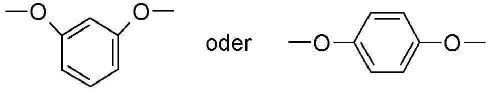
und n einen Durchschnittswert von 0,1 bis 100, bevorzugt von 0,5 bis 50, insbesondere von 0,8 bis 10 und ganz besonders von 1 bis 5.

Die derzeit im Handel erhältlichen RPD-Produkte sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Phosphor der Wertigkeitsstufe +0 ist im Sinne der Erfindung keine Verbindung und ist somit erfindungsgemäß nicht als Flammschutzmittel geeignet. Die erfindungsgemäße thermoplstische Formmasse ist folglich frei von rotem Phosphor.

Erfindungsgemäß enthält die thermoplastische Formmasse einen faser- oder teilchenförmigen Zusatzstoff D). Als Zusatzstoff D) können auch Mischungen unterschiedlicher Zusatzstoffe verwendet werden. Dieser Zusatzstoff D) kann z.B. Glasfasern, Kohlenstoff-Fasern, AramidFasern, Kaliumtitanat-Fasern, Glaskugeln, amorphe Kieselsäure, Calciumsilicat, Magnesiumcarbonat, Kaoline, Kreide, gepulverter Quarz, Glimmer, Bariumsulfat, Felspat, Metallhydroxide, Metalloxide, ähnliche Mineralfüllstoffe oder ein Keramiken umfassen. Auch Mischungen der Zusatzstoffe D) sind möglich.
Allerdings umfasst der Zusatzstoff D) keine halogenhaltigen Verbindungen, seltenen Erden Salze oder roten Phosphor.

Des weiteren kann die erfindungsgemäße thermoplastische Formmasse einen Zusatzstoff E) enthalten. Als Zusatzstoff E) können auch Mischungen unterschiedlicher Zusatzstoff verwendet werden. Die Zusatzstoffe E) können Ausgewählt werden aus der Gruppe der Stabilisatoren, Antistatika, Keimbildner, Verarbeitungshilfsmittel, Schlagzähigkeitsverbesserer, Gleit- und Entformungshilfen, Pigmente und Antioxidantien.
Als UV-Stabilisatoren können zum Beispiel substituierte Resorcine, Salicylate, Benzotriazole und Benzophenonen verwendet werden.
Als anorganische Pigmente eigenen sich beispielsweise Titandioxid, Ultramarinblau und/oder Ruß, während als organische Pigmente z.B. Perylene, Phthalocyanine und/oder Chinacridone beigemischt werden können. Auch eigenen sich Farbstoffe wie Nigrosin und/oder Antrachione zum Färben der thermoplastischen Zusammensetzung.
Als Gleit- und Entformunsgmittel können langkettige Fettsäuren (z.B. Stearinsäure) oder deren Salze (z.B.Ca-Stearat) eingesetzt werden. Gleit- und Entformunsgmittel werden zumeist in Gewichtsanteilen von bis zu 1% in Bezug auf die Gesamtmasse der thermoplastischen Formmasse eingesetzt.
Als Weichmacher können insbesondere Phthalsäuredioctylester, Phthalsäuredibenzylester, Phthalsäurebutylbenzylester, Kohlenwasserstofföle, und/oder N-(n-Butyl)benzolsulfonamid dienen.
Allerdings umfasst der Zusatzstoff E) keine halogenhaltigen Verbindungen, seltenen Erden Salze oder roten Phosphor.

Die Komponenten A), B), C), D) und E) können in verschiedenen Gewichtsanteilen vermischt werden. Die folgenden Angaben zu den Gewichtprozenten beziehen sich auf die Gesamtmasse der thermoplastischen Zusammensetzung. In einer thermoplastischen Zusammensetzung ergibt die Addition der einzelnen Gewichtsprozent-Angaben 100 Gew.-%.

Bezogen auf die Gesamtmasse enthalten erfindungsgemäße thermoplastische Formmassen zum Beispiel von 40 bis 60 Gew.-% der Komponente (A). Bevorzugt kann (A) in Gewichtsanteilen von 40 bis 55 Gew.-%, insbesondere von 45 bis 54 Gew.-% bezogen auf die Gesamtmasse der thermoplastischen Formmasse eingesetzt werden.

Vorzugsweise enthalten die erfindungsgemäßen thermoplastischen Formmassen von 0,01 bis 10 Gew.-% der Komponente B), bezogen auf die Gesamtmasse der thermoplastischen Formmasse. Besonders bevorzugt enthält die erfindungsgemäße thermoplastische Formmasse von 0,01 bis 8 Gew.-% der Komponente B), insbesondere von 1 bis 8 Gew.-%, bezogen auf die Gesamtmasse der thermoplastischen Formmasse.

Komponente (C)wird in Gewichtsanteilen von 10 bis 30 Gew.-% bezogen auf die Gesamtmasse der thermoplastischen Formmasse zugesetzt. Bevorzugt wird Komponente C) in Gewichtsanteilen von 5 bis 30 Gew.-%, insbesondere von 5 bis 25 Gew.-% zugesetzt.

Das Verstärkungsmittel (D) wird in Gewichtsanteilen von 0.01 bis 60 Gew.-% in Bezug auf die Gesamtmasse der thermoplastischen Formmasse eingesetzt. In einer bevorzugten Ausführungsform enthält die thermoplastische Formmasse einen Zusatzstoff in Gewichtsanteilen von 15 bis 50 Gew.-%, insbesondere von 15 bis 30 Gew.-% bezogen auf die Gesamtmasse der thermoplastischen Formmasse.

Sofern enthalten kann der Zusatzstoff (E) in Gewichtsanteilen von 0 bis 50 Gew.-% in Bezug auf die Gesamtmasse der thermoplastischen Formmasse eingesetzt werden. In einer bevorzugten Ausführungsform enthält die thermoplastische Formmasse den Zusatzstoff E) in Gewichtsanteilen von 1 bis 50 Gew.-%, insbesondere von 1 bis 45 Gew.-% bezogen auf die Gesamtmasse der thermoplastischen Formmasse.

**Beispiele für Zusammensetzungen der thermoplastischen Zusammensetzung**

| Komponente | Bsp. 1 | Bsp. 2 | Bsp. 3 | Bsp. 4 | Bsp. 5 | Bsp. 6 | Bsp. 7 | Bsp. 8 | Bsp. 9 | Bsp. 10 | Bsp. 11 |
|---|---|---|---|---|---|---|---|---|---|---|---|
| A | 42 | 48 | 52 | 56 | 52 | 52 | 52 | 52 | 50 | 50 | 50 |
| b1 | 0 | 0 | 0 | 0 | 1 | 0 | 5 | 0 | 0 | 0 | 0 |
| b2 | 3 | 3 | 3 | 3 | 0 | 0 | 0 | 0 | 3 | 3 | 3 |
| b3 | 0 | 0 | 0 | 0 | 0 | 1 | 0 | 5 | 0 | 0 | 0 |
| C | 15 | 15 | 15 | 15 | 15 | 15 | 15 | 15 | 10 | 20 | 15 |
| D | 25 | 25 | 25 | 25 | 25 | 25 | 25 | 25 | 25 | 25 | 30 |
| E | 15 | 9 | 5 | 1 | 7 | 7 | 3 | 3 | 7 | 2 | 2 |

Die erfindungsgemäße thermoplastische Formmasse zeichnet sich durch eine hohe Kriechstromfestigkeit (CTI) bei gleichzeitiger Halogenfreiheit aus. Die Formmasse ist flammhemmend. Das heißt, dass die thermoplastische Formmasse höchsten Anforderungen des Flammtests UL94 genügt und im Flammtest tropfstabil ist. Darüber hinaus zeichnet sich die thermoplastische Formmasse durch gute mechanische Eigenschaften, insbesondere eine hohe Kerbschlagfestigkeit aus. Außerdem weist die thermoplastische Formmasse eine helle Eigenfarbe auf, da sie keinen roten Phosphor enthält. Die Abwesenheit von seltenen Erden Salzen ist unter wirtschaftlichen Gesichtspunkten wünschenswert.

### Beispiele

### Normen

### ISO 1183

Kunststoffe - Verfahren zur Bestimmung der Dichte von nicht verschäumten Kunststoffen Deutsche Fassung EN ISO 1183:2004.

### ISO 1133

Kunststoffe - Bestimmung der Schmelze-Massefließrate (MFR) und der Schmelze-Volumenfließrate (MVR) von Thermoplasten; Deutsche Fassung EN ISO 1133:2005.

### UL94 "Test for flammability of plastic materials for parts in devices and appliances"

### IEC 60112 Edition 4.1 EN

"Method for the determination of the proof and the comparative tracking indices of solid insulating materials"

### Komponenten

### Komponente A-a

Poly(butylenterephthalat), der Firma BASF SE mit einer Viskositätszahl von 107 mL/g (gemessen von einer 0.5 Gew.-% Lösung in einem Phenol/o-Dichlorobenzol (1/1)-Gemisch bei 23 °C), Ultradur® B2550.

### Komponente B-a

Polypropylen, der Firma LyondeIIBaseII mit einer Dichte (gemessen nach IS01183) von 0.9 g/cm³ und einem Schmelzflussindex MFR (gemessen nach ISO 1133) von 12 g/10 min (230°C, 2.16 kg), Moplen® 501.

### Komponente B-b

Poly(propylen-ethylen), der Firma LyondeIIBaseII mit einer Dichte (gemessen nach IS01183) von 0.9 g/cm³ und einem Schmelzflussindex MFR (gemessen nach ISO 1133) von 15 g/10 min (230°C, 2.16 kg), Moplen 300N.

### Komponente B-c

Unmodifiziertes LDPE mit einer Dichte (gemessen nach ISO 1183) von 0.917 g/cm³ und einem Schmelzflussindex MFR (gemessen nach ISO 1133; Kunststoffe - Bestimmung der Schmelze-Massefließrate (MFR) und der Schmelze-Volumenfließrate (MVR) von Thermoplasten; Deutsche Fassung EN ISO 1133:2005) von 20 g/10 min (190°C, 2.16 kg), Lupolen® 1800S.

### Komponente c1-a

Melaminpolyphosphat, Melapur® 200 der Firma BASF SE.

### Komponente c1-b

Melamincyanurat, Melapur® MC 25 der Firma BASF SE.

### Komponente c2-a

Aluminiumdiethylphosphinat, Exolit® OP 1230 der Firma Clariant.

### Komponente D-a

Glasfasern, Durchmesser 10 µm, Standard Faserlänge 4,5 mm, PPG 3786 Glasfasern.

### Komponente E-a

Schmiermittel oxidiertes Polyethylen-Wachs, Luwax® OA5 der Firma BASF SE.

### Verarbeitung

Die Komponenten wurden in einem Doppelschneckenextruder mit einem L/D Verhältnis von 18 extrudiert. Während des Verfahrens lag die Compoundierungstemperatur bei 260 °C. Der Durchsatz lag bei 10 Kg/h. Die Schneckengeschwindigkeit lag bei 300 rpm.
Der erhaltenen Polymerstränge wurden in ein Granulat geschnitten. Zur Weiterverarbeitung wurde dieses Granulat einem Spritzgießverfahren unterzogen.

### Flammtests

Flammtests wurde nach der Richtlinie UL94 durchgeführt. Die hierbei verwendeten Proben wiesen eine Dicke von 0,8 mm auf.

### Kriechstromfestigkeit

Tests zur Kriechstromfestigkeit wurden nach der Richtlinie IEC 60112 durchgeführt. Die Tests wurden an Proben mit den Abmaßen 60 mm x 60 mm x 3 mm durchgeführt

### Beispiele 1 bis 6

Vergleichsbeispiel 1 zeigt eine thermoplastische Formmasse, der kein Polyolefin beigemischt wurde. Die Beispiele zeigen, dass durch den Einsatz eines Polyolefins die Kriechstromfestigkeit (CTI) der halogenfreien Formmasse erhöht wurde. Gleichzeitig genügte die Probe höchsten Anforderungen des Flammtests UL94 und war im Flammtest tropfstabil. Außerdem blieb im Kerbschlagfestigkeit erhalten.

| % | 1 V | 2 | 3 | 4 | 5 | 6 |
|---|---|---|---|---|---|---|
| A-a | 52.2 | 49.2 | 49.2 | 51.2 | 49.2 | 47.2 |
| B-a | - | 3 | - | - | - | - |
| B-b | - | - | 3 | - | - | - |
| B-c | - | - | - | 1 | 3 | 5 |
| c1-a | 3.75 | 3.75 | 3.75 | 3.75 | 3.75 | 3.75 |
| c1-b | 3.75 | 3.75 | 3.75 | 3.75 | 3.75 | 3.75 |
| c2-a | 15 | 15 | 15 | 15 | 15 | 15 |
| D-a | 25 | 25 | 25 | 25 | 25 | 25 |
| E-a | 0.3 | 0.3 | 0.3 | 0.3 | 0.3 | 0.3 |
| UL94 0.8 mm | V2 | V0 | V0 | V0 | V0 | V2 |
| Tropfstabilität | nein | ja | ja | ja | ja | ja |
| Kriechstromfestigkeit CTI (V) | 550 | 600 | 600 | 575 | 600 | 575 |
| Tensile strength (MPa) | 104 | 101 | 102 | 99 | 96 | 90 |
| Tensile Modulus (Gpa) | 10.3 | 10.1 | 10.1 | 10.2 | 9.8 | 9.4 |
| Elongation beim Bruch (%) | 2.0 | 2.2 | 2.1 | 1.8 | 1.9 | 1.8 |
| Kerbschlagfestigkeit Charpy (kJ/m²) | 40.9 | 42.1 | 43.0 | 37.1 | 35.5 | 37.5 |

## Patentansprüche

1. Halogen- und seltene Erden freie thermoplastische Formmasse, die frei von rotem Phosphor ist, enthaltend
A) von 40 bis 60 Gew.-% eines Polyalkylenterephthalats
B) von 0.01 bis 10 Ges.-% eines Polyolefins ausgewählt aus der Gruppe
b1) Polyethylen mit einem Molekulargewicht (Mw) von 85 000 bis 900 000 g/mol
b2) Polypropylen mit einem Molekulargewicht (Mw) von 85 000 bis 900 000 g/mol
b3) Polypropylen-Copolymere mit einem Molekulargewicht (Mw) von 85 000 bis 900 000 g/mol
und deren Mischungen,
C) von 10 bis 30 Gew-% eines Flammschutzmittel, ausgewählt aus der Gruppe
c1) der stickstoffhaltigen Verbindungen
c2) der phosphorhaltigen Verbindungen
und deren Mischungen,
D) von 0.01 bis 60 Gew.-% eines Verstärkungsmittels
E) von 0 bis 50 Ges.-% eines weiteren Zusatzstoffes
wobei die Summe der Gewichtsanteile 100 Ges.-% bezogen auf die thermoplastische Formmasse ergibt.

2. Thermoplastische Formmasse nach Anspruch 1 worin A) ein Polybutylenterephthalat ist

3. Thermoplastische Formmasse nach Anspruch 1 oder 2 worin c2) ausgewählt ist aus der Gruppe der Phosphate, Phosphin- und Diphosphinsalze sowie deren Mischungen.

4. Thermoplastische Formmasse nach mindestens einem der Ansprüche 1 bis 3 worin c1): eine Verbindung aus der Gruppe der stickstoffhaltigen Heterocyclen mit mindestens einem Stickstoffatom ist.

5. Thermoplastische Formmasse nach mindestens einem der Ansprüche 1 bis 4 worin c1) ein melaminhaltiges Flammschutzmittel ist.

6. Thermoplastische Formmasse nach mindestens einem der Ansprüche 1 bis 5, worin B) eine Polypropylen ist.

7. Thermoplastische Formmasse nach mindestens einem der Ansprüche 1 bis 5, worin B) ein Poly(propylen-ethylen) ist.

8. Thermoplastische Formmasse nach mindestens einem der Ansprüche 1 bis 5, worin B) ein Polyethylen ist.

9. Verwendung der thermoplastischen Formmasse gemäß mindestens einem der Ansprüche 1 bis 8 als Überzugmittel.

10. Verwendung der thermoplastischen Form masse gemäß mindestens einem der Ansprüche 1 bis 8 zur Herstellungen von Fasern, Folien oder Formkörpern.

11. Fasern, Folien oder Formkörper enthaltend eine thermoplastische Formmasse gemäß mindestens einem der Ansprüche 1 bis 8.

## Claims

1. A thermoplastic molding composition free from halogens and from rare earth metals and free from red phosphorus and comprising
A) from 40 to 60% by weight of a polyalkylene terephthalate
B) from 0.01 to 10% by weight of a polyolefin selected from the group of
b1) polyethylene having a molar mass (Mw) of from 85 000 to 900 000 g/mol
b2) polypropylene having a molar mass (Mw) of from 85 000 to 900 000 g/mol
b3) polypropylene copolymers having a molar mass (Mw) of from 85 000 to 900 000 g/mol
and mixtures of these,
C) from 10 to 30% by weight of a flame retardant selected from the group of
c1) the nitrogen-containing compounds
c2) the phosphorus-containing compounds and mixtures of these,
D) from 0.01 to 60% by weight of a reinforcing agent
E) from 0 to 50% by weight of another additive where the total of the proportions by weight is 100% by weight based on the thermoplastic molding composition.

2. The thermoplastic molding composition according to claim 1, in which A) is a polybutylene terephthalate.

3. The thermoplastic molding composition according to claim 1 or 2, in which c2) has been selected from the group of the phosphates, phosphinic salts and diphosphinic salts, and mixtures of these.

4. The thermoplastic molding composition according to at least one of claims 1 to 3, in which c1) is a compound from the group of the nitrogen-containing heterocycles having at least one nitrogen atom.

5. The thermoplastic molding composition according to at least one of claims 1 to 4, in which c1) is a melamine-containing flame retardant.

6. The thermoplastic molding composition according to at least one of claims 1 to 5, in which B) is a polypropylene.

7. The thermoplastic molding composition according to at least one of claims 1 to 5, in which B) is a poly(propylene-ethylene).

8. The thermoplastic molding composition according to at least one of claims 1 to 5, in which B) is a polyethylene.

9. The use of the thermoplastic molding composition according to at least one of claims 1 to 8 as coating means.

10. The use of the thermoplastic molding composition according to at least one of claims 1 to 8 for producing fibers, foils, or moldings.

11. A fiber, foil, or molding comprising a thermoplastic molding composition according to at least one of claims 1 to 8.

## Revendications

1. Mélange à mouler thermoplastique exempt d'halogènes et de terres rares, qui est exempt de phosphore rouge, contenant
A) de 40 à 60 % en poids d'un poly(téréphtalate d'alkylène),
B) de 0, 01 à 10 % en poids d'une polyoléfine choisie dans le groupe
b1) polyéthylène ayant une masse moléculaire (Mw) de 85 000 à 900 000 g/mol,
b2) polypropylène ayant une masse moléculaire (Mw) de 85 000 à 900 000 g/mol,
b3) copolymères de polypropylène ayant une masse moléculaire (Mw) de 85 000 à 900 000 g/mol,
et les mélanges de ceux-ci,
C) de 10 à 30 % en poids d'un retardateur de flamme, choisi dans le groupe
c1) des composés azotés,
c2) des composés phosphorés,
et des mélanges de ceux-ci,
D) de 0,01 à 60 % en poids d'un agent de renforcement,
E) de 0 à 50 % en poids d'un additif supplémentaire la somme des parties en poids faisant 100 % en poids, par rapport au mélange à mouler thermoplastique.

2. Mélange à mouler thermoplastique selon la revendication 1, dans lequel A) est un poly(téréphtalate de butylène).

3. Mélange à mouler thermoplastique selon la revendication 1 ou 2, dans lequel c2) est choisi dans le groupe des phosphates, des sels de phosphine et de diphosphine, et les mélanges de ceux-ci.

4. Mélange à mouler thermoplastique selon au moins l'une des revendications 1 à 3, dans lequel c1) est un composé du groupe des composés hétérocycliques azotés ayant au moins un atome d'azote.

5. Mélange à mouler thermoplastique selon au moins l'une des revendications 1 à 4, dans lequel c1) est un retardateur de flamme contenant de la mélamine.

6. Mélange à mouler thermoplastique selon au moins l'une des revendications 1 à 5, dans lequel B) est un polypropylène.

7. Mélange à mouler thermoplastique selon au moins l'une des revendications 1 à 5, dans lequel B) est un poly(propylène-éthylène).

8. Mélange à mouler thermoplastique selon au moins l'une des revendications 1 à 5, dans lequel B) est un polyéthylène.

9. Utilisation du mélange à mouler thermoplastique selon au moins l'une des revendications 1 à 8 en tant que composition de revêtement.

10. Utilisation du mélange à mouler thermoplastique selon au moins l'une des revendications 1 à 8 pour la fabrication de fibres, de feuilles ou d'objets moulés.

11. Fibres, feuilles ou objets moulés contenant un mélange à mouler thermoplastique selon au moins l'une des revendications 1 à 8.
